# FASCICULE DE BREVET EUROPEEN

(11) **EP 0 935 066 B1**
(45) Date de publication et mention de la délivrance du brevet: **25.08.2004**
(21) Numéro de dépôt: 99400033.9
(22) Date de dépôt: 08.01.1999
(51) Int. Cl.: F02M 37/00, F02M 31/20

(54) **Procédé de commande de la circulation du carburant dans un véhicule à moteur diesel et circuit de carburant correspondant**
Kraftstoffkreislaufregelungsverfahren in einem Fahrzeug mit Dieselmotor und dazugehöriger Kraftstoffkreislauf
Fuel circulation control procedure in a diesel engine motor vehicle and corresponding fuel circuit

(30) Priorité: 09.01.1998 FR 9800154
(43) Date de publication de la demande: 11.08.1999
(73) Titulaire: Renault s.a.s., 92100 Boulogne Billancourt (FR)
(72) Inventeur: Rossi, Gérard, 78890 Garancieres (FR)
(74) Mandataire: Srour, Elie

(56) Documents cités:
- DE-A- 19 547 243
- FR-A- 2 490 733
- US-A- 3 973 536
- US-A- 4 385 615
- US-A- 4 479 465

## Description

L'invention concerne les véhicules à. moteur diesel, et plus particulièrement la circulation du carburant alimentant ces moteurs. «Il est connu dans le document US 3 973 536 un procédé qui consiste à égaliser la température du carburant dans la conduite de retour et dans la conduite d'admission. A cet égard, il est prévu un refroidisseur placé sur la conduite de retour. Par contre, le dispositif de ce document ne permet pas d'éviter le passage du carburant à travers ce refroidisseur, en particulier par temps froid, pour réchauffer le filtre et favoriser les démarrages à froid.

Le document US 4 385615 enseigne l'utilisation d'une vanne thermostatique, mais celle-ci est placée directement sur la conduite de retour carburant vers le réservoir. Comme indiqtté dans ce document si le carburant n'est pas suffisamment froid, la vanne va commander le passage du carburant à travers le refroidisseur. Par contre, si le carburant est considéré comme étant suffisamment froid, le retour du carburant vers le réservoir s'effectue directement sans passer par le refroidisseur. Par conséquent, là encore, il n'est pas question de réinjecter du carburant chaud dans le réservoir. »

L'invention propose un circuit de carburant apte à mettre en oeuvre un procédé de commande la circulation de carburant dans un véhicule à moteur diesel. On alimente en carburant la pompe à injection et les injecteurs depuis le réservoir via un filtre à carburant et on renvoit l'excès de carburant provenant de la pompe à injection et des injecteurs dans le circuit d'alimentation entre le filtre et le réservoir, c'est-à-dire sans passer par le réservoir.

En d'autres termes, par rapport à des solutions connues de l'art antérieur prévoyant un retour de l'excès de carburant vers le réservoir, on dirige le retour d'excès de carburant provenant de la pompe à injection et des injecteurs en amont du filtre au lieu de le diriger vers le réservoir.

On économise ainsi l'implantation d'un circuit spécifique de retour de carburant vers le réservoir. On réduit donc la conduite de retour de carburant ce qui conduit à un gain quantitatif d'agrafes et autres fixations ainsi qu'à une suppression de l'orifice d'entrée du carburant dans le réservoir.

On peut renvoyer l'excès de carburant directement en amont du filtre. On peut également renvoyer l'excès de carburant en amont du filtre en le faisant passer à travers un dispositif thermostatique ou thermostat, de façon à contrôler sa température.

A cet égard, par temps chaud en particulier, le thermostat se ferme, laissant circuler le retour du gazoil de la pompe à injection et des injecteurs au travers d'un radiateur air/carburant refroidissant le carburant avant que celui-ci ne soit réintroduit dans le filtre.

Par temps froid, le thermostat s'ouvre, laissant circuler le retour du gazoil de la pompe à injection et des injecteurs, directement vers le filtre, c'est-à-dire sans passer par le radiateur air/carburant, permettant ainsi d'autoréchauffer le filtre plus rapidement et, par ce biais, le carburant admis dans la pompe à injection.

L'invention permet donc de gérer la température du carburant à l'entré du filtre à gazoil afin d'améliorer les performances, les consommations des véhicules et les démarrages à froid.

L'invention a pour objet un circuit de carburant pour véhicule à moteur diesel, selon la revendication 1.

D'autres caractéristiques et avantages de l'invention apparaîtront à l'examen de la description détaillée de modes de réalisation et de mise en oeuvre, nullement limitatifs, et des dessins annexés sur lesquels :
- la figure 1 illustre très schématiquement un mode de réalisation d'un circuit de carburant selon l'invention, et
- la figure 2 illustre le circuit de la figure 1 selon un autre mode de fonctionnement.

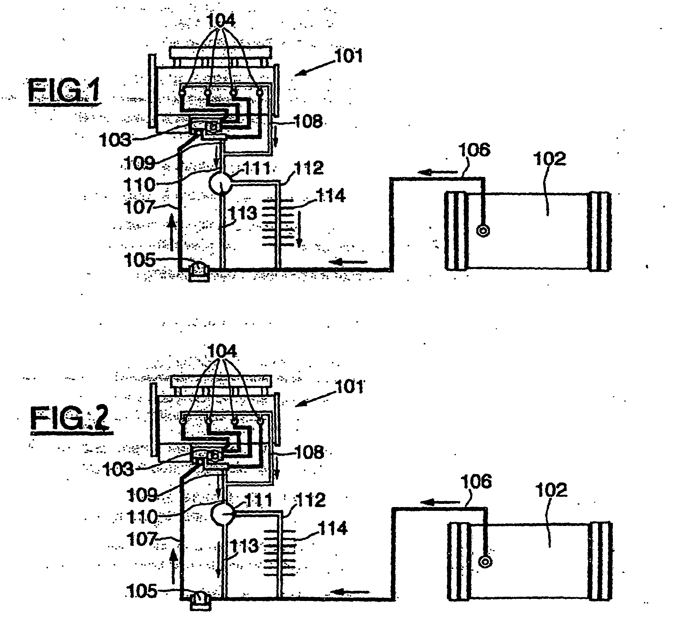

Sur les figures 1 et 2, la référence 101 désigne un moteur diesel alimenté en carburant à partir d'un réservoir de carburant 102. D'une façon connue en soi, du réservoir de carburant 102 part une première conduite d'alimentation 106 aboutissant à un filtre à carburant 105. De ce filtre à carburant 105 part une deuxième conduite d'alimentation aboutissant à la pompe d'injection 103 alimentant les injecteurs 104 du moteur.

Sur la figure 1, on voit que la conduite terminale 110 est équipée d'un thermostat 111 d'où partent une première branche terminale 113 raccordée directement sur la conduite d'alimentation 106 en amont du filtre 105, et une deuxième branche terminale 112 traversant un radiateur air/carburant 114 avant de se raccorder sur la conduite d'alimentation 106, également en amont du filtre 105.

La figure 1 illustre un mode de fonctionnement de ce circuit pour une température relativement élevée du carburant, par exemple par temps chaud. Plus précisément, le thermostat se ferme (première branche terminale 113 obturée) laissant circuler le retour de carburant de la pompe à injection et des injecteurs dans la deuxième branche terminale 112 au travers du radiateur-air/carburant 114. On refroidit donc le carburant avant de le réintroduire en amont du filtre.

La figure 2 diffère de la figure 1 par la position du thermostat. Plus précisément, cette figure 2 illustre un fonctionnement avec une température relativement basse du carburant, par exemple par temps froid. Le thermostat 111 s'ouvre, laissant circuler le retour de carburant dans la première branche terminale 113 de façon à le retourner directement au filtre. Ceci permet d'autoréchauffer le filtre plus rapidement et par conséquent également d'autoréchauffer plus rapidement le carburant admis dans la pompe à injection.

## Revendications

1. Circuit de carburant pour véhicule à moteur diesel, **caractérisé par le fait qu'**il comprend un circuit d'alimentation (106, 107) raccordant le réservoir de carburant (102) aux injecteurs (104) via le filtre à carburant (105) et la pompe à injection (103), et un circuit de retour de l'excès de carburant comportant une conduite de retour-pompe (109) raccordée sur la pompe à injection (103), des conduites de retour-injecteurs (108) respectivement raccordées sur les injecteurs et une conduite terminale de retour (110) sur laquelle se raccordent la conduite de retour-pompe et les conduites de retour-injecteurs, cette conduite terminale possédant un thermostat (111) pour diriger sélectivement le carburant vers une première branche terminale (113) raccordée directement sur le circuit d'alimentation (106) en un premier endroit en amont du filtre (105), ou vers une deuxième branche terminale (112) traversant un radiateur air/carburant (114) et raccordée sur le circuit d'alimentation (106) en un deuxième endroit en amont du filtre.

## Patentansprüche

1. Kraftstoffkreis für ein Fahrzeug mit Dieselmotor, **dadurch gekennzeichnet, dass** er einen Versorgungskreis (106, 107) umfasst, welcher den Kraftstofftank (102) mit den Einspritzern (104) über den Kraftstofffilter (105) und die Einspritzpumpe (103) verbindet, und einen Rückkehrkreis des Überschusses an Kraftstoff, der eine Pumpenrückkehrleitung (109) aufweist, die mit der Einspritzpumpe (103) verbunden ist, Einspritzerrückkehrleitungen (108), jeweils mit den Einspritzern verbunden und eine Endrückkehrleitung (110), mit welcher die Pumpenrückkehrleitung und die Einspritzrückkehrleitung verbunden sind, wobei diese Endleitung einen Thermostat (111) aufweist, zum selektiven Dirigieren des Kraftstoffs zu einer ersten Endverzweigung (113), die direkt mit dem Versorgungskreis (106) an der ersten Stelle stromaufwärts des Filters (105) verbunden ist, oder zu einer zweiten Endverzweigung (112), die einen Luft/Kraftstoffkühler (114) durchquert und mit dem Versorgungskreis (106) an einer zweiten Stelle stromaufwärts des Filters verbunden ist.

## Claims

1. Fuel circuit for diesel vehicles, **characterised by** the fact that it comprises a supply circuit (106, 107) connecting the fuel tank (102) to the injectors (104) via the fuel filter (105) and the injection pump (103), and an excess fuel return circuit comprising a pump return pipe (109) connected to the injection pump (103), injector return pipes (108) respectively connected to the injectors, and a terminal return pipe (110) to which the pump return pipe and the injector return pipes are connected, such terminal pipe having a thermostat (111) to selectively direct the fuel to a first terminal branch (113) connected directly to the supply circuit (106) at a first point upstream of the filter (105), or to a second terminal branch (112) passing through an air/fuel radiator (114) and connected to the supply circuit (106) at a second point upstream of the filter.
